# EUROPEAN PATENT APPLICATION

(11) **EP 1 681 869 A1**
(43) Date of publication of application: **19.07.2006**
(21) Application number: 05300023.8
(22) Date of filing: 12.01.2005
(51) Int. Cl.: H04N 5/782

(54) **Method for pre-programmed recording**

(71) Applicant: Thomson Licensing, 92100 Boulogne-Billancourt (FR)
(72) Inventor: Dumont, Frank, 269564 Singapore (SG)
(74) Representative: Rittner, Karsten

(57) **Abstract**

The present invention relates to method for performing pre-programmed recording in an apparatus for reading from and writing to recording media, each recording requiring the generation (12) of recording specific data at the end of the recording session.

According to the invention, in case of successive pre-programmed recordings separated by a time interval which is insufficient for the generation (12) of the recording specific data, the successive recordings are treated as a single recording and the recording specific data are generated (12) when the single recording is finished.

## Description

The present invention relates to method for performing pre-programmed recording in an apparatus for reading from and writing to recording media, and to an audio/video device using such method.

Many audio/video devices such as VCRs (video cassette recorders), DVD-recorders (digital versatile disk), or HDD-recorders (hard disk drive) offer the possibility to schedule recordings, i.e. to specify at which time a recording shall start. Specifically in DVD-recorders, when a recording is finished the recorder starts to generate recording specific data, e.g. titles and thumbnails, which are then stored on the recording medium in addition to the main recording. This leads to the problem that, when two recordings are back-to-back, i.e. the second recording starts immediately or only shortly after the end of the first recording, the time needed for title and thumbnail generation causes a time gap between the recordings. This time gap is in the range of one minute, i.e. a time recognizable by the user.

It is, therefore, an object of the invention to propose a method for performing pre-programmed recording capable of handling successive pre-programmed recordings separated by a time interval which is insufficient for the generation of the recording specific data.

According to the invention, this object is achieved by a method for performing pre-programmed recording in an apparatus for reading from and writing to recording media, each recording requiring the generation of recording specific data at the end of the recording session, wherein in case of successive pre-programmed recordings separated by a time interval which is insufficient for the generation of the recording specific data, the successive recordings are treated as a single recording and the recording specific data are generated when the single recording is finished. A typical device for reading from and writing to recording media is a DVD-recorder. In such a recorder time consuming generation of menu data, thumbnails etc. is required when a pre-programmed recording is finished. Currently available recorders require a pause of at least 30 seconds between successive recordings. This may result in loss of part of the data that the user wanted to be recorded. The method according to the invention has the advantage that no pause is required between the successive recordings, i.e. no content is lost. Of course this method is likewise applicable to recorders for other types of optical media, HDD recorders, etc.

Favorably, the single recording is split into separate recordings before generating the recording specific data. This has the advantage that despite the recording in a single recording session the recordings can be treated as independent recordings, which allows for an easier navigation and editing of the recordings. In order to easily find the location for splitting the single recording an identifier is preferably recorded at a position where the splitting of the single recording is to be done.

Advantageously, the recording specific data includes at least one of a menu, chapter information, thumbnails, and navigation information. A menu gives an overview about the content of the recording medium and allows fast access to the different recording. The chapter information gives access to sub-sections of a recording, also referred to as chapters. The chapters might be identified already during the recording process, or later after the completion of the recording session by scanning the completed recording for possible chapter boundaries. Especially in this case a certain time is needed, during which no further recording can be performed. The generation of thumbnails, i.e. small visual indicators, requires a video processor. Therefore, this device is at least for a short time unavailable for other tasks, e.g. the compression of audio or video data for a successive recording. The navigation information is necessary for playback of the recorded content, especially for jumping correctly in case of fast forward or fast backward mode or other types of trick modes.

Preferably, a subunit of data to be recorded is terminated at the end time of the current pre-programmed recording, and a new subunit of data to be recorded is started at the start time of a successive pre-programmed recording. For example, in case of an MPEG-encoded recording a new I-frame, a new GOP (group of pictures) or a new cell is started at the start time of the successive recording. Similar subunits are available for other compression or recording standards. This measure greatly facilitates the splitting of the recording into two separate recordings, thereby reducing the time needed for completing the overall recording process.

Favorably, a certain area of the recording medium is left unrecorded at the boundary between successive pre-programmed recordings for recording the recording specific data. This allows to record the recording specific data immediately following the recording to which it belongs.

Preferably, a variable time interval is used for determining if the time interval between successive pre-programmed recordings is insufficient for the generation of the recording specific data. For example, the variable time interval might depend on the amount of data and/or the number of pre-programmed recordings included in the single recording. This allows to take into account that it takes more time to generate the recording specific data for a long pre-programmed recording than for a short pre-programmed recording. In addition, also the splitting of the single recording into successive recordings requires a certain amount of time, which has to be considered.

Advantageously, a method according to the invention is used in an apparatus for reading from and writing to recording media for performing pre-programmed recording on a recording medium.

For a better understanding the invention shall now be explained in more detail in the following description with reference to the figure. It is understood that the invention is not limited to this exemplary embodiment and that specified features can also expediently be combined and/or modified without departing from the scope of the present invention. In the figure:

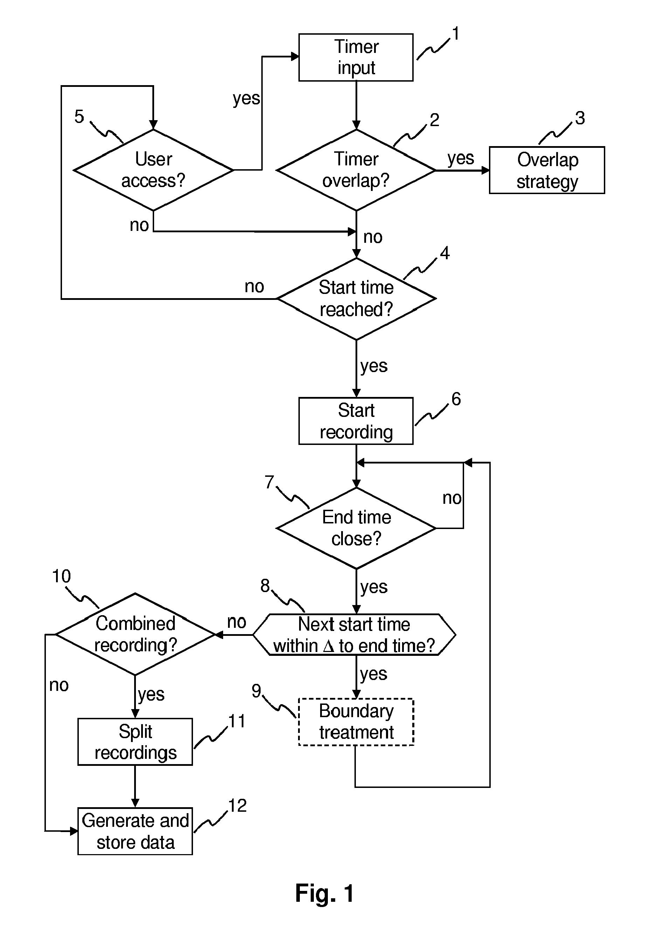

- Fig. 1: depicts a method for performing pre-programmed recording according to the invention.

In Fig. 1 a method for performing pre-programmed recording according to the invention is shown schematically. In a first step a timer input by a user is received 1, i.e. a new pre-programmed recording is defined. After the input 1 of the new timer it is checked 2 whether this new timer collides with a previously entered timer. If this is the case, an overlap strategy is performed 3. For example, the user might be requested to correct the new timer or to decide if the previous should be shortened or even deleted. If the new timer does not collide with a previous timer, it is determined 4 if the start time of a timer is reached. As long as this is not the case, the user has the possibility to access 5 and modify a programmed timer or to enter 1 a new timer. Any modified or new timer is checked 2 for collision with other timers. As soon as it is determined 4 that the start time of a timer is reached, recording of the pre-programmed recording is started 6. During recording it is constantly checked 7 if the end time of the pre-programmed recording is close. When this is the case, it is determined 8 if the start time of the succeeding recording is within a time interval Δ from the end time of the current recording, where Δ is the time needed for generating and storing the recording specific data. If this is the case, the recording session simply continues with the next pre-programmed recording without generating the recording specific data. Additionally some kind of boundary treatment can be performed 9 between the succeeding recordings, e.g. by storing an indicator at this boundary, leaving a certain unrecorded space on the recording medium, or closing a specific subunit at the end of the current pre-programmed recording and opening an new subunit at the beginning of the successive pre-programmed recording. When for any subsequent recording the start time of the successive pre-programmed recording is not within the time interval Δ from the end time of the current recording, it is checked 10 if successive pre-programmed recordings have been recorded in the session. If so, these recordings are split 11 before generating and storing 12 the recording specific data. Otherwise the recording specific data are immediately generated and stored 12. It should be noted that Δ is not necessarily a fixed time interval. Preferably it is dependent on the amount of data that has been recorded in the recording session and/or the number of successive recordings of the recording session.

## Claims

1. Method for performing pre-programmed recording in an apparatus for reading from and writing to recording media, each recording requiring the generation (12) of recording specific data at the end of the recording session,
**characterized in that**
in case of successive pre-programmed recordings separated by a time interval which is insufficient for the generation (12) of the recording specific data, the successive recordings are treated as a single recording and the recording specific data are generated (12) when the single recording is finished.

2. Method according to claim 1, **wherein** the single recording is split (11) into separate recordings before generating (12) the recording specific data.

3. Method according to claim 1 or 2, **wherein** the recording specific data includes at least one of a menu, chapter information, thumbnails, and navigation information.

4. Method according to one of claims 2 or 3, **wherein** an identifier is recorded at a position where the splitting of the single recording is to be done.

5. Method according to one of claims 1 to 4, **wherein** a subunit of data to be recorded is terminated at the end time of the current pre-programmed recording, and a new subunit of data to be recorded is started at the start time of a successive pre-programmed recording.

6. Method according to one of claims 1 to 5, **wherein** a certain area of the recording medium is left unrecorded at the boundary between successive pre-programmed recordings for recording the recording specific data.

7. Method according to one of claims 1 to 6, **wherein** a variable time interval is used for determining if the time interval between successive pre-programmed recordings is insufficient for the generation (12) of the recording specific data.

8. Method according to claim 7, **wherein** the variable time interval depends on the amount of data and/or the number of pre-programmed recordings included in the single recording.

9. Apparatus for reading from and writing to recording media, **characterized in that** it performs a method according to one of claims 1 to 8 for performing pre-programmed recording on a recording medium.
